# EUROPÄISCHE PATENTSCHRIFT

(11) **EP 3 292 297 B1**
(45) Veröffentlichungstag und Bekanntmachung des Hinweises auf die Patenterteilung: **22.02.2023**
(21) Anmeldenummer: 16717362.4
(22) Anmeldetag: 18.04.2016
(51) Int. Cl.: F02M 25/022, F02M 25/028

(54) **WASSEREINSPRITZVORRICHTUNG EINER BRENNKRAFTMASCHINE**
WATER INJECTION DEVICE OF AN INTERNAL COMBUSTION ENGINE
DISPOSITIF D'INJECTION D'EAU D'UN MOTEUR À COMBUSTION INTERNE

(30) Priorität: 07.05.2015 DE 102015208502
(43) Veröffentlichungstag der Anmeldung: 14.03.2018
(73) Patentinhaber: Robert Bosch GmbH, 70442 Stuttgart (DE)
(72) Erfinder: OBERGFAELL, Simon, 71336 Waiblingen (DE); BURAK, Ingmar, 70437 Stuttgart (DE); SCHENK, Peter, 71640 Ludwigsburg (DE)
(86) Internationale Anmeldenummer: PCT/EP2016/058516
(87) Internationale Veröffentlichungsnummer: WO 2016/177560

(56) Entgegenhaltungen:
- WO-A1-03/089775
- WO-A1-03/089776
- WO-A1-2005/088114
- FR-A1- 2 484 543
- JP-A- 2002 317 642
- JP-A- 2010 248 988
- US-A- 4 279 223
- US-A- 4 396 347
- US-A- 5 125 366
- US-A1- 2008 097 679

## Beschreibung

### Stand der Technik

Die vorliegende Erfindung betrifft eine Wassereinspritzvorrichtung einer Brennkraftmaschine sowie eine derartige Brennkraftmaschine.

Aufgrund steigender Anforderungen an reduzierte Kohlenstoffdioxidemissionen werden Brennkraftmaschinen zunehmend hinsichtlich des Kraftstoffverbrauchs optimiert. Allerdings können bekannte Brennkraftmaschinen in Betriebspunkten mit hoher Last nicht optimal im Hinblick auf den Verbrauch betrieben werden, da der Betrieb durch Klopfneigung und hohe Abgastemperaturen begrenzt ist. Eine mögliche Maßnahme zur Reduzierung der Klopfneigung und zur Senkung der Abgastemperaturen ist die Einspritzung von Wasser. Hierbei sind üblicherweise separate Wassereinspritzsysteme vorhanden, um die Wassereinspritzung zu ermöglichen. So ist z.B. aus der WO 2014/080266 A1 ein Wassereinspritzsystem für eine Brennkraftmaschine mit Abgasrückführung bekannt, bei dem das Wasser in den Massenstrom der Abgasrückführung eingespritzt wird.

Zwischen den Betriebspunkten, bei denen das Wassereinspritzsystem aktiviert wird, ist die zum Fördern des Wassers benutzte Pumpe abgeschaltet. Das heißt, dass das Wasser in den Injektoren und den Leitungen des Wassereinspritzsystems steht. Durch die hohen Temperaturen der Teile der Brennkraftmaschine in der Nähe des Wassereinspritzsystems kann das stehende Wasser aufheizen und eventuell verdampfen. Dieser Effekt verschärft sich bei Fahrten in großer Höhe, wo der Luftdruck niedriger ist. Durch die Dampfbildung kann es zu Funktionsbeeinträchtigungen beim erneuten Start des Wassereinspritzsystems kommen, da der Systemdruck durch den Dampf nur verzögert aufgebaut werden kann. Somit ist das Wassereinspritzsystem verzögert betriebsbereit. Aufgrund dieser verzögerten Betriebsbereitschaft kann es bei schnellen Lastsprüngen zu Temperaturspitzen im Abgas sowie

Klopfereignissen in der Verbrennung kommen. WO 03/089775 A1 und JP 2002 317642 A offenbaren weitere gattungsgemäße Wassereinspritzvorrichtungen.

### Offenbarung der Erfindung

Die erfindungsgemäße Wassereinspritzvorrichtung einer Brennkraftmaschine mit den Merkmalen des Anspruchs 1 weist demgegenüber den Vorteil auf, dass der Systemdruck auch in inaktiven Phasen der Wassereinspritzvorrichtung oberhalb des Dampfdrucks des Wassers gehalten werden kann. Somit wird eine Dampfbildung des Wassers vermieden sowie kurze Druckaufbauzeiten und eine schnelle Einspritzfreigabe sichergestellt. Dies wird erfindungsgemäß durch das Vorsehen eines Absperrelements in der Wassereinspritzvorrichtung erreicht, welches dazu dient, den Systemdruck in einem Bereich der Wassereinspritzvorrichtung bei inaktiver Wassereinspritzung aufrecht zu erhalten. Hierbei weist die erfindungsgemäße Wassereinspritzvorrichtung einer Brennkraftmaschine einen Wassertank zum Speichern von Wasser, mindestens einen Wasserinjektor, ein Förderelement zum Fördern von Wasser aus dem Wassertank in den Wasserinjektor, und ein Absperrelement auf, welches in einem Bereich zwischen dem Förderelement und dem Wasserinjektor angeordnet ist, und welches eingerichtet ist, einen Systemdruck zwischen dem Absperrelement und dem Wasserinjektor auf einem Niveau zu halten, um ein Verdampfen des im Bereich befindlichen Wassers zu vermeiden.

Die Unteransprüche zeigen bevorzugte Weiterbildungen der Erfindung.

Erfindungsgemäß ist das Absperrelement als elektrisches Absperrventil ausgebildet. Das Absperrventil stellt sicher, dass Wasser im Bereich zwischen dem Wassertank und dem Wasserinjektor steht.

Erfindungsgemäß ist das Absperrventil eingerichtet, bei aktiver Wassereinspritzung, insbesondere durch Bestromung, in eine Offenstellung gebracht zu werden. Das Absperrventil ist als ein elektrisch betriebenes Absperrventil ausgebildet, welches durch eine Steuereinheit in einfacher und genauer Weise gesteuert werden kann. Bei aktiver Wassereinspritzung wird das Absperrventil bestromt und ermöglicht somit die Wasserförderung aus dem Wassertank in den Wasserinjektor. Bei Deaktivierung der Wassereinspritzung wird das Absperrventil ebenfalls stromlos geschaltet und hält den Systemdruck somit auf einem Druckniveau, welches ausreicht, damit das sich erwärmende Wasser nicht siedet.

Nach einer alternativen bevorzugten Ausgestaltung der vorliegenden Erfindung kann das Absperrelement ein Rückschlagventil umfassen. Das Rückschlagventil lässt die Strömung von Wasser nur in der Richtung vom Wassertank zum Wasserinjektor zu. Somit wird eine Verdampfung des Wassers im Bereich zwischen dem Absperrelement und dem Wasserinjektor vermieden. Besonders bevorzugt ist das Rückschlagventil eingerichtet, stromlos geöffnet zu werden. Dabei wird ein Schließelement des Rückschlagventils vom strömenden Fluid ohne Bestromung freigegeben.

In vorteilhafter Weise ist das Absperrelement eingerichtet, stromlos geschlossen zu sein. Das Absperrelement wird durch eine Rückstellkraft z.B. durch ein Federelement geschlossen.

Bei einer Änderung der Betriebsrichtung des Förderelements ist erfindungsgemäß das Absperrelement eingerichtet, insbesondere durch Bestromung, in die Offenstellung gebracht zu werden. Somit kann durch eine einfache Steuerung des Absperrelements Wasser zurück in den Wassertank zugeführt werden.

Das Absperrelement ist bevorzugt eingerichtet, den Systemdruck im Bereich zwischen dem Absperrelement und dem Wasserinjektor auf einem Niveau größer als 3 × 10⁵ Pa, bevorzugt größer als 5 × 10⁵ Pa, besonders bevorzugt größer als 5 × 10⁵ Pa und kleiner als 10 × 10⁵ Pa, zu halten. Somit kann zum einen eine Dampfbildung im Bereich zwischen dem Absperrelement und dem Wasserinjektor vermieden werden, und zum anderen eine Wandbenetzung des Wassers am Einlasskanal vermieden werden, wenn Wasser in einen Einlasskanal einer Brennkraftmaschine eingespritzt wird.

Nach einer weiteren vorteilhaften Ausgestaltung der vorliegenden Erfindung umfasst die Vorrichtung eine Vielzahl von Wasserinjektoren, welche an einem Verteiler angeschlossen sind, wobei der Verteiler im Bereich zwischen dem Absperrelement und den Wasserinjektoren angeordnet ist.

Ein weiterer Aspekt der vorliegenden Erfindung betrifft eine Brennkraftmaschine, welche eine erfindungsgemäße Wassereinspritzvorrichtung umfasst. Dabei werden die in Bezug auf die erfindungsgemäße Vorrichtung erhaltenen Vorteile ebenfalls erhalten.

Besonders bevorzugt wird die Brennkraftmaschine nach dem Otto-Prinzip und mit Benzin betrieben. Als eine Brennkraftmaschine, welche nach dem Otto-Prinzip betrieben wird, ist die Brennkraftmaschine zu verstehen, bei welcher eine Verbrennung von Benzin bzw. Benzin-Luft-Gemisch durch Fremdzündung in Form einer Zündkerze erfolgt. Da bei einer solchen Brennkraftmaschine der Zündzeitpunkt durch die Fremdzündung genau vorbestimmt ist, können die in Bezug auf die erfindungsgemäße Wassereinspritzvorrichtung beschriebenen Vorteile komplett ausgenutzt werden. Durch die kurzen Druckaufbauzeiten und die schnelle Einspritzfreigabe der erfindungsgemäßen Wassereinspritzvorrichtung kann auch bei schnellen Lastsprüngen eine Klopfneigung vermieden werden.

### Kurze Beschreibung der Zeichnungen

Nachfolgend werden Ausführungsbeispiele der Erfindung unter Bezugnahme auf die begleitende Zeichnung im Detail beschrieben, wobei gleiche bzw. funktional gleiche Teile jeweils mit den gleichen Bezugszeichen bezeichnet sind. In der Zeichnung ist:
- Figur 1: eine stark vereinfachte schematische Ansicht einer Brennkraftmaschine mit einer Wassereinspritzvorrichtung gemäß einem ersten Ausführungsbeispiel der vorliegenden Erfindung,
- Figur 2: eine vereinfachte schematische Ansicht der Wassereinspritzvorrichtung gemäß dem ersten Ausführungsbeispiel, und
- Figur 3: eine vereinfachte schematische Ansicht der Wassereinspritzvorrichtung gemäß einem zweiten Ausführungsbeispiel der vorliegenden Erfindung.

### Ausführungsformen der Erfindung

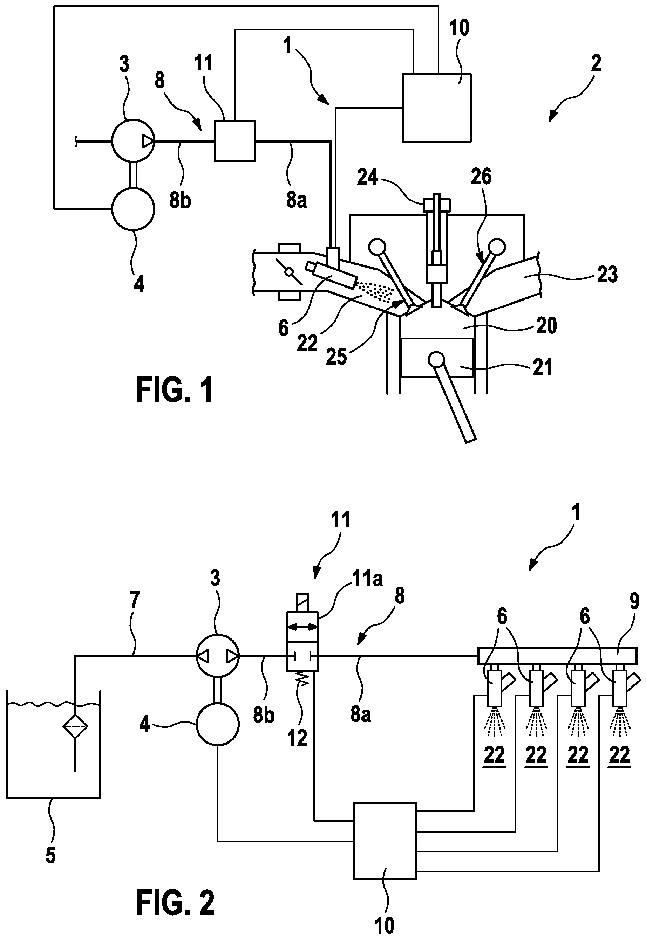

Nachfolgend wird unter Bezugnahme auf die Figuren 1 und 2 eine Wassereinspritzvorrichtung 1 einer Brennkraftmaschine 2 im Detail gemäß einem ersten Ausführungsbeispiel beschrieben. Insbesondere wird die Brennkraftmaschine 2 nach dem Otto-Prinzip und mit Benzindirekteinspritzung betrieben.

In Figur 1 ist die Brennkraftmaschine 2 schematisch dargestellt, welche eine Vielzahl von Zylindern aufweist, sowie ein Teil der erfindungsgemäßen Wassereinspritzvorrichtung 1. Die Brennkraftmaschine 2 umfasst pro Zylinder einen Brennraum 20, in welchem ein Kolben 21 hin und her bewegbar ist. Ferner weist die Brennkraftmaschine 2 pro Zylinder einen Einlasskanal 22 auf, über welchen Luft zum Brennraum 20 zugeführt wird. Abgas wird über einen Abgaskanal 23 abgeführt. Hierzu sind am Einlasskanal 22 ein Einlassventil 25 und am Abgaskanal 23 ein Auslassventil 26 angeordnet. Das Bezugszeichen 24 bezeichnet ferner ein Kraftstoffeinspritzventil.

Am Einlasskanal 22 ist ferner ein Wasserinjektor 6 angeordnet, welcher über eine Steuereinheit 10 Wasser in den Einlasskanal 22 der Brennkraftmaschine 2 einspritzt. In diesem Ausführungsbeispiel ist ein Wasserinjektor 6 pro Zylinder vorgesehen. Alternativ können zur besseren Aufbereitung oder zur Erhöhung der pro Verbrennungszyklus maximal einspritzbaren Wassermenge zwei Wasserinjektoren pro Zylinder angeordnet sein.

Ferner weist die Wassereinspritzvorrichtung 1 ein als Pumpe ausgebildetes Förderelement 3 und einen elektrischen Antrieb 4 zum Antreiben der Pumpe auf. Wie aus der Figur 2 ersichtlich ist, ist des Weiteren ein Wassertank 5 vorgesehen, welcher durch eine erste Leitung 7 mit dem Förderelement 3 verbunden ist. Eine zweite Leitung 8 verbindet das Förderelement 3 mit einem Verteiler 9 bzw. einem Rail, an welchem eine Vielzahl von Wasserinjektoren 6 angeschlossen ist.

Erfindungsgemäß ist zwischen dem Förderelement 3 und dem Verteiler 9 bzw. den Wasserinjektoren 6 ein Absperrelement 11 angeordnet, welches die zweite Leitung 8 in einen ersten Leitungsabschnitt 8a und einen zweiten Leitungsabschnitt 8b unterteilt und über die Steuereinheit 10 gesteuert wird.

Das Absperrelement 11 ist eingerichtet, einen Systemdruck zwischen dem Absperrelement 11 und den Wasserinjektoren 6 im ersten Leitungsabschnitt 8a der zweiten Leitung 8 auf einem Niveau zu halten, um ein Verdampfen des im ersten Leitungsabschnitt 8a befindlichen Wassers zu vermeiden.

Hierbei ist das Absperrelement 11 als ein elektrisches Absperrventil 11a ausgebildet. Das Absperrventil 11a ist ein 2/2-Wegeventil.

Insbesondere ist das Absperrventil 11a eingerichtet, den Systemdruck im ersten Leitungsbereich 8a der zweiten Leitung 8 auf einem Niveau größer als 3 × 10⁵ Pa zu halten. Um eine optimale Wassereinspritzung und somit auch eine optimale Verbrennung zu ermöglichen, ist das Absperrventil 11a so eingerichtet, dass der Systemdruck im ersten Leitungsbereich 8a auch kleiner als 10 × 10⁵ Pa gehalten wird.

Insbesondere ist das Absperrventil 11a so gestaltet, dass es stromlos z.B. durch eine Schließkraft eines Federelements 12 geschlossen wird. Bei einer deaktivierten Wassereinspritzung wird das Absperrventil 11a stromlos geschaltet und hält den Systemdruck somit auf einem zum Vermeiden einer Dampfbildung ausreichenden Niveau (erste Schaltstellung des Absperrventils 11a). Bei einer Aktivierung der Wassereinspritzung wird das Absperrventil 11a bestromt und ermöglicht somit eine Förderung des Wassers zu den Wasserinjektoren 6 (zweite Schaltstellung des Absperrventils 11a).

Das Absperrventil 11a ist ferner eingerichtet, bei einer Änderung der Drehrichtung der Pumpe, wobei Wasser zurück in den Wassertank 5 zugeführt wird, durch Bestromung geöffnet zu werden (zweite Schaltstellung des Absperrventils 11a).

In Figur 2 befindet sich das Absperrventil 11a in der ersten Schaltstellung, d.h. der geschlossenen Stellung.

Durch das Vorsehen eines Absperrelements 11 zwischen dem Förderelement 3 und der Vielzahl von Wasserinjektoren 6 kann eine Dampfbildung in der erfindungsgemäßen Wassereinspritzvorrichtung 1 vermieden werden. Somit ist die Wassereinspritzvorrichtung 1 bei inaktiven Betriebspunkten betriebsbereit und kann schnell in Einsatz gebracht werden, wenn die Verbrennung der Brennkraftmaschine 2 eine Wassereinspritzung anfordert.

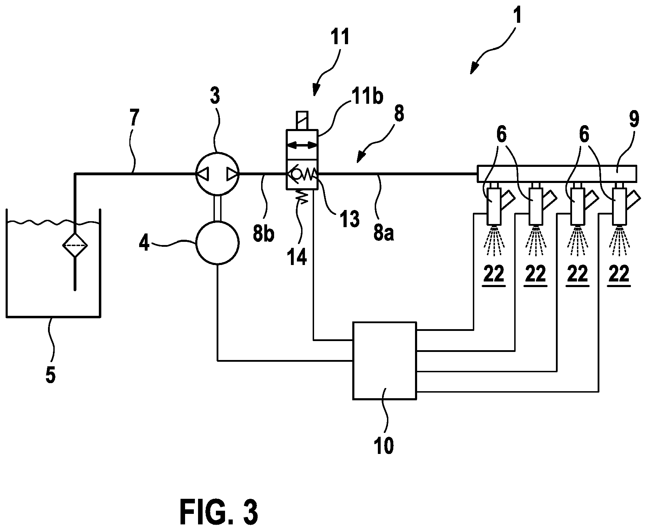

Das zweite Ausführungsbeispiel der erfindungsgemäßen Wassereinspritzvorrichtung 1 von Figur 3 unterscheidet sich grundsätzlich vom ersten Ausführungsbeispiel dadurch, dass anstatt eines Absperrventils 11a ein Absperrelement 11 in der zweiten Leitung 8 angeordnet ist, welches ein Rückschlagventil 11b umfasst

Das Absperrelement 11 ist insbesondere als ein 2/2-Wegeventil ausgebildet. Das Rückschlagventil 11b ist eingerichtet, stromlos durch einen Druck des Wassers im zweiten Leitungsabschnitt 8b, welcher gegen z.B. eine Kraft eines Federelements 13 wirkt, geöffnet zu werden (offene Stellung des Rückschlagventils 11b). Wenn der Druck im zweiten Leitungsabschnitt 8b die Kraft des Federelements 13 und den Druck des im ersten Leitungsbereich 8a befindlichen Wassers nicht mehr überwinden kann, schließt das Rückschlagventil 11b (geschlossene Stellung). Die offene und die geschlossene Stellung des Rückschlagventils 11b entsprechen einer ersten Schaltstellung des Absperrelements 11. In Figur 3 befindet sich das Absperrelement 11 in der ersten Schaltstellung und das Rückschlagventil 11b in der geschlossenen Stellung.

Bei einer Änderung der Betriebsrichtung des Förderelements 3 ist das Absperrelement 11 eingerichtet, durch Bestromung in eine zweite Schaltstellung gebracht zu werden. In dieser Schaltstellung wird Wasser in den Wassertank 5 zugeführt. Das Absperrelement 11 wird von der zweiten Schaltstellung zurück in die erste Schaltstellung z.B. durch eine Rückstellkraft eines Federelements 14 gebracht. Da nur bei einem Rücksaugen von Wasser in den Wassertank 5 eine Bestromung notwendig ist, bietet das Absperrelement 11 mit dem Rückschlagventil 11b den Vorteil eines reduzierten Steueraufwands, wodurch die entsprechenden Kosten verringert werden können.

## Patentansprüche

1. Wassereinspritzvorrichtung einer Brennkraftmaschine (2), umfassend:
- einen Wassertank (5) zum Speichern von Wasser,
- mindestens einen Wasserinjektor (6),
- ein Förderelement (3) zum Fördern von Wasser aus dem Wassertank (5) in den Wasserinjektor (6), und
- ein Absperrelement (11), welches in einem Bereich (8a) zwischen dem Förderelement (3) und dem Wasserinjektor (6) angeordnet ist, und welches eingerichtet ist, einen Systemdruck zwischen dem Absperrelement (11) und dem Wasserinjektor (6) auf einem Niveau zu halten, um ein Verdampfen des im Bereich (8a) befindlichen Wassers zu vermeiden, **dadurch gekennzeichnet, dass** das Absperrelement (11) als elektrisches Absperrventil (11a) ausgebildet ist, wobei das Absperrelement (11) eingerichtet ist, bei aktiver Wassereinspritzung, insbesondere durch Bestromung, in eine Offenstellung gebracht zu werden, wobei das Absperrelement (11) eingerichtet ist, bei einer Änderung der Betriebsrichtung des Förderelements (3), insbesondere durch Bestromung, in die Offenstellung gebracht zu werden.

2. Wassereinspritzvorrichtung nach Anspruch 1, wobei das Absperrelement (11) ein Rückschlagventil (11b) umfasst.

3. Wassereinspritzvorrichtung nach Anspruch 2, wobei das Rückschlagventil (11b) eingerichtet ist, stromlos geöffnet zu werden.

4. Wassereinspritzvorrichtung nach einem der vorherigen Ansprüche, wobei das Absperrelement (11) eingerichtet ist, stromlos geschlossen zu sein.

5. Wassereinspritzvorrichtung nach einem der vorherigen Ansprüche, wobei das Absperrelement eingerichtet ist, den Systemdruck im Bereich (8a) zwischen dem Absperrelement (11) und dem Wasserinjektor (6) auf einem Niveau größer als 3 ×10⁵ Pa, bevorzugt größer als 5 ×10⁵ Pa, besonders bevorzugt größer als 5 ×10⁵ Pa und kleiner als 10 ×10⁵ Pa, zu halten.

6. Wassereinspritzvorrichtung nach einem der vorherigen Ansprüche, umfassend eine Vielzahl von Wasserinjektoren (6), welche an einem Verteiler (9) angeschlossen sind, wobei der Verteiler (9) im Bereich (8a) zwischen dem Absperrelement (11) und den Wasserinjektoren (6) angeordnet ist.

7. Brennkraftmaschine, umfassend eine Vorrichtung (1) zum Einspritzen von Wasser nach einem der vorherigen Ansprüche.

8. Brennkraftmaschine nach Anspruch 7, welche eingerichtet ist, nach dem Otto-Prinzip und mit Benzin betrieben zu werden.

## Claims

1. Water injection apparatus of an internal combustion engine (2), comprising:
- a water tank (5) for storing water,
- at least one water injector (6),
- a conveying element (3) for conveying water from the water tank (5) into the water injector (6), and
- a shut-off element (11) which is arranged in a region (8a) between the conveying element (3) and the water injector (6), and which is configured to keep the system pressure between the shut-off element (11) and the water injector (6) at a level, in order to avoid evaporating of the water which is situated in the region (8a), **characterized in that** the shut-off element (11) is configured as an electric shut-off valve (11a), the shut-off element (11) being configured to be moved into an open position, in particular by way of energization, in the case of an active water injection, the shut-off element (11) being configured to be moved into the open position, in particular by way of energization, in the case of a change in the operating direction of the conveying element (3).

2. Water injection apparatus according to Claim 1, the shut-off element (11) comprising a check valve (11b).

3. Water injection apparatus according to Claim 2, the check valve (11b) being configured to be opened without current.

4. Water injection apparatus according to one of the preceding claims, the shut-off element (11) being configured to be closed without current.

5. Water injection apparatus according to one of the preceding claims, the shut-off element being configured to keep the system pressure in the region (8a) between the shut-off element (11) and the water injector (6) at a level of greater than 3×10⁵ Pa, preferably greater than 5×10⁵ Pa, particularly preferably greater than 5×10⁵ Pa and less than 10×10⁵ Pa.

6. Water injection apparatus according to one of the preceding claims, comprising a multiplicity of water injectors (6) which are connected to a distributor (9), the distributor (9) being arranged in the region (8a) between the shut-off element (11) and the water injectors (6) .

7. Internal combustion engine, comprising an apparatus (1) for injecting water according to one of the preceding claims.

8. Internal combustion engine according to Claim 7 which is configured to be operated according to the Otto principle and using petrol.

## Revendications

1. Dispositif d'injection d'eau d'un moteur à combustion interne (2), comprenant :
- un réservoir d'eau (5) pour stocker de l'eau,
- au moins un injecteur d'eau (6),
- un élément de refoulement (3) pour refouler de l'eau du réservoir d'eau (5) à l'injecteur d'eau (6), et
- un élément d'arrêt (11) qui est disposé dans une zone (8a) entre l'élément de refoulement (3) et l'injecteur d'eau (6), et qui est adapté pour maintenir une pression de système entre l'élément d'arrêt (11) et l'injecteur d'eau (6) à un niveau pour éviter une évaporation de l'eau se trouvant dans la zone (8a), **caractérisé en ce que** l'élément d'arrêt (11) est réalisé sous forme de vanne d'arrêt électrique (11a), l'élément d'arrêt (11) étant adapté pour être amené dans une position ouverte lors d'une injection d'eau active, notamment par alimentation électrique, l'élément d'arrêt (11) étant adapté pour être amené dans la position ouverte lors d'un changement de la direction de fonctionnement de l'élément de refoulement (3), notamment par alimentation électrique.

2. Dispositif d'injection d'eau selon la revendication 1, dans lequel l'élément d'arrêt (11) comprend une vanne anti-retour (11b).

3. Dispositif d'injection d'eau selon la revendication 2, dans lequel la vanne anti-retour (11b) est adaptée pour être ouverte sans courant.

4. Dispositif d'injection d'eau selon l'une quelconque des revendications précédentes, dans lequel l'élément d'arrêt (11) est adapté pour être fermé sans courant.

5. Dispositif d'injection d'eau selon l'une quelconque des revendications précédentes, dans lequel l'élément d'arrêt est adapté pour maintenir la pression de système dans la zone (8a) entre l'élément d'arrêt (11) et l'injecteur d'eau (6) à un niveau supérieur à 3 × 10⁵ Pa, de préférence supérieur à 5 × 10⁵Pa, de manière particulièrement préférée supérieur à 5 × 10⁵ Pa et inférieur à 10 × 10⁵ Pa.

6. Dispositif d'injection d'eau selon l'une quelconque des revendications précédentes, comprenant une pluralité d'injecteurs d'eau (6) qui sont raccordés à un distributeur (9), le distributeur (9) étant disposé dans la zone (8a) entre l'élément d'arrêt (11) et les injecteurs d'eau (6).

7. Moteur à combustion interne, comprenant un dispositif (1) d'injection d'eau selon l'une quelconque des revendications précédentes.

8. Moteur à combustion interne selon la revendication 7, qui est adapté pour fonctionner selon le principe d'Otto et avec de l'essence.
